# EUROPÄISCHE PATENTSCHRIFT

(11) **EP 2 042 011 B1**
(45) Veröffentlichungstag und Bekanntmachung des Hinweises auf die Patenterteilung: **25.08.2010**
(21) Anmeldenummer: 08159222.2
(22) Anmeldetag: 27.06.2008
(51) Int. Cl.: A01B 59/06

(54) **Arbeitsfahrzeug mit Anbauvorrichtung**
Work vehicle with fitting device
Véhicule de chantier avec dispositif de montage

(30) Priorität: 28.09.2007 DE 102007046890
(43) Veröffentlichungstag der Anmeldung: 01.04.2009
(73) Patentinhaber: CLAAS Selbstfahrende Erntemaschinen GmbH, 33428 Harsewinkel (DE)
(72) Erfinder: Bernhardt, Prof. Dr. Gerd, 01728 Bannewitz/OT Hänichen (DE); Fedotov, Dr. Sergej, 01069 Dresden (DE)

(56) Entgegenhaltungen:
- EP-A- 1 360 886
- EP-A- 1 407 650
- WO-A-2004/056168
- FR-A- 2 443 791

## Beschreibung

Die Erfindung betrifft ein Arbeitsfahrzeug mit einer Anbauvorrichtung nach dem Oberbegriff des Anspruchs 1.

Aus der WO 2004/056168 ist eine Anbauvorrichtung für als Schlepper ausgeführte Arbeitsfahrzeuge bekannt geworden, deren Koppelstruktur obenseitig über eine sogenannte obenliegende Hubwelle an der Tragrahmenstruktur des Schleppers abgestützt wird. Die Hubwelle ist über einteilig oder mehrteilig ausgeführte Hubarmanordnungen mit zwei an der Tragrahmenstruktur des Schleppers gelenkig angeordneten Hubzylindern gekoppelt. Frontseitig nimmt die Hubarmanordnung zwei oder paarweise angeordnete in vertikaler Richtung positionierte längenveränderliche Koppelglieder, hier hydraulisch verstellbare Hubzylinder, auf, die an ihren untenseitigen, freien Enden gelenkig mit paarweise angeordneten Unterlenkern verbunden sind. Die Unterlenker sind jeweils gelenkig an der Tragrahmenstruktur des Schleppers in einem unterhalb der Fahrzeugachse liegenden Bereich angeschlagen. Durch Druckbeaufschlagung oder Druckentlastung der mit der Hubwelle verbundenen Hubzylinder kann der Koppelrahmen und das damit verbundene Anbaugerät in vertikaler Richtung ausgehoben oder abgesenkt werden. Zugleich kann durch Druckbeaufschlagung oder Druckentlastung der nahezu vertikal angeordneten Hubzylinder eine spezielle Lage des Koppelrahmens und damit des Anbaugerätes justiert werden. Aufgrund dessen, dass die vertikal verlaufenden Hubzylinder jeweils in einem mittleren Bereich an den Unterlenkern angreifen, tritt insbesondere bei asymmetrischer Lasteinleitung in die Anbauvorrichtung Biegung in den Unterlenkern, eine Verdrehung der Hubwelle und Druckbelastungen auf die den freien Enden der Unterlenker zugeordneten Arretierungen auf.

Zur Optimierung der auf die Anbauvorrichtung einwirkenden Belastungen sowie unter dem Gesichtspunkt eines hochflexiblen Einsatzes einer derartigen Anbauvorrichtung ist unter anderem aus der EP 1 360 886 ein hubwellenloses Konzept einer Anbauvorrichtung bekannt geworden. Je nach gewünschten Freiheitsgraden umfasst eine solche, aus sechs Koppelgliedern bestehende Anbauvorrichtung bis zu sechs längenveränderliche oder zwei längeveränderliche und eine Vielzahl starrer Koppelglieder über die ein Anbaugerät an einem Arbeitsfahrzeug, beispielsweise einem Schlepper, abgestützt und geführt wird. Aufgrund dessen, dass die Koppelglieder jeweils unmittelbar an dem Schlepper und einem Koppelrahmen oder unmittelbar an dem Arbeitsgerät angeordnet sind, tritt in den Koppelgliedern nur Zug- und Druckbelastungen auf. Die rechts- und linksseitigen Koppelglieder der Anbauvorrichtung sind jedoch hydraulisch miteinander gekoppelt, so dass bei asymmetrischer Lasteinleitung in die Anbauvorrichtung, wie dies etwa bei Arbeiten mit einem Pflug oder beim Mähen mit Seitenmähwerken auftritt, eine asymmetrische Belastung der Koppelglieder auftritt. Zur Vermeidung von Schäden an den in der Regel als Hubzylinder ausgeführten Koppelgliedern müssen diese deshalb erheblich überdimensioniert werden. Zudem verlangt die ausschließliche Koppelung des Anbaugerätes mit dem Traktor über die Koppelglieder eine aufwendige Ansteuerung der Koppelglieder, damit das jeweilige Anbaugerät die gewünschte Hubbewegung präzise ausführt.

Es ist deshalb Aufgabe der Erfindung die beschriebenen Nachteile des Standes der Technik zu vermeiden und insbesondere eine Anbauvorrichtung vorzuschlagen, die auch bei asymmetrischer Lasteinleitung eine ausgeglichene Belastung der die Anbauvorrichtung bildenden Koppelglieder gewährleistet.

Diese Aufgabe wird erfindungsgemäß durch die kennzeichnenden Merkmale des Anspruchs 1 gelöst.

Indem die Anbauvorrichtung für ein Arbeitsfahrzeug zur Koppelung eines Arbeitsgerätes an das Arbeitsfahrzeug eine in der Tragrahmenstruktur des Arbeitsfahrzeugs gelagerte Hubwelleneinheit und eine mit dieser in Wirkverbindung stehenden Koppelstruktur umfasst und die Koppelstruktur erste gelenkig an der Tragrahmenstruktur angeordnete obere Koppelelemente, zweite gelenkig an der Tragrahmenstruktur angelenkte untere Koppelelemente und gelenkig an Hubarmen der Hubwelle angeordnete Verbindungselemente umfasst und wobei zumindest eines der Verbindungselemente starr ausgebildet ist, wird sichergestellt, dass die rechts- und linksseitig angeordneten Koppel- und Verbindungselemente mechanisch über die Hubwelle gekoppelt sind, sodass auch bei asymmetrischer Lasteinleitung in die Anbauvorrichtung eine nahezu ausgeglichene Lastverteilung innerhalb der Koppelstruktur erreicht wird, sodass eine Überdimensionierung der Koppelelemente zur Absicherung bei asymmetrischer Lasteinleitungen entbehrlich wird. Durch die Integration einer Hubwelleneinheit und zumindest einer starren Verbindungsstrebe in die Koppelstruktur wird zudem sichergestellt, dass die Anbauvorrichtung in einer sogenannten passiven Schwimmstellung betrieben werden kann, in der keines der längenveränderlichen Koppelglieder aktiv angesteuert werden muss. Die sogenannte Schwimmstellung lässt die Koppeleinrichtung Bodenunebenheiten allein durch Eigengewicht der Arbeitsgeräte ausgleichen, ohne den Hydraulikkreis zu benutzen. Mit einer solchen Schwimmstellung ist das Arbeitsgerät, vorzugsweise ein Bodenbearbeitungsgerät, an der Anbauvorrichtung allein durch die Wirkung der Prozesskräfte selbstführend gehalten.

Eine große Flexibilität bezüglich Anschaffungskosten, realisierbarer Freiheitsgrade und Nutzung der Anbauvorrichtung für verschiedenste Einsatzfälle ergibt sich dann, wenn wahlweise eines oder mehrere der Koppel- und Verbindungselemente starr und die übrigen Koppelglieder und Verbindungselemente längenveränderlich ausgebildet sind.

Eine optimierte Lasteinleitung in die Koppelstruktur sowie letztlich in die Anbauvorrichtung wird in einer vorteilhaften Ausgestaltung der Erfindung dadurch möglich, dass die oberen und unteren Koppelelemente und die Verbindungselemente der Koppelstruktur paarweise angeordnet sind.

Indem in einer vorteilhaften Weiterbildung der Erfindung die Koppel- und Verbindungselemente starr ausgebildet sind und durch Aktivierung des zumindest einen Hubzylinders der Hubwelleneinheit das an die Koppelstruktur adaptierte Arbeitsgerät eine vertikale Schwenkbewegung ausführen kann, wird eine kostengünstige Basiskonfiguration der erfindungsgemäßen Anbauvorrichtung bereitgestellt, die einer Vielzahl von allgemeinen Einsatzfällen des Schleppers genügt.

In einer vorteilhaften Weiterbildung der Erfindung sind die oberen Koppelelemente längenveränderlich und die Verbindungselemente und die unteren Koppelelemente starr ausgebildet, sodass durch Aktivierung des zumindest einen Hubzylinders der Hubwelleneinheit und/oder der längenveränderlichen oberen Koppelelemente das an die Koppelstruktur adaptierte Arbeitsgerät eine Translationsbewegung entlang der vertikalen Schwenkachse, eine Rotationsbewegung um die Querachse und/oder eine gesteuerte Seitenbewegung, die sich aus der Rotation um eine vertikale Achse und eine überlagerte Translationsbewegung entlang der Querachse zusammensetzt, ausführen kann. Neben der kostengünstigen Verwendung einer Vielzahl von Gleichteilen hat eine solche Ausgestaltung der Anbauvorrichtung insbesondere den Vorteil, dass die Anbauvorrichtung besonders für die Kopplung mit Arbeitsgeräten, die eine vertikale Schwimmstellung erfordern, wie etwa Bodenbearbeitungsgeräte, geeignet ist.

Sind in einer weiteren vorteilhaften Ausgestaltung der Erfindung die oberen Koppelelemente und ein Verbindungselement längenveränderlich und das weitere Verbindungselement und die unteren Koppelelemente starr ausgebildet, kann durch Aktivierung des zumindest einen Hubzylinders der Hubwelleneinheit und/oder den längenveränderlichen Koppelelementen und/oder des längenveränderlichen Verbindungselementes das an die Koppelstruktur adaptierte Arbeitsgerät eine Translationsbewegung entlang einer vertikalen Achse, eine Rotationsbewegung um die Querachse, eine Rotationsbewegung um die Fahrzeuglängsachse und/oder eine gesteuerte Seitenbewegung, die sich aus der Rotation um eine vertikale Achse und eine überlagerte Translationsbewegung entlang der Querachse zusammensetzt, ausführen. Neben einem einfachen Ausgleich von Hangneigungen, etwa bei Arbeitsmaschinen mit großer Arbeitsbreite, kann mittels einer derartigen Konfiguration die Einstellung eines Pfluges erheblich verkürzt werden, da die Ansteuerung der längenveränderlichen Koppelglieder leichter und komfortabler gegenüber herkömmlichen Systemen umsetzbar ist.

In einer weiteren vorteilhaften Ausgestaltung der Erfindung umfasst das Arbeitsfahrzeug gelenkte Fahrachsen, die eine Hundegangfunktion ermöglichen und jeweils eines der unteren und oberen Koppelelemente und ein Verbindungselement der paarweise angeordneten Koppel- und Verbindungselemente ist starr und das weitere jeweils längenveränderlich ausgebildet und durch Aktivierung zumindest der längenveränderlichen unteren und oberen Koppelelemente sowie des längenveränderlichen Verbindungselementes die Bewegung des an die Koppelstruktur adaptierten Arbeitsgerätes an die Lenkbewegung der Fahrzeugachsen koppelbar ist. Damit kann auch beim Arbeiten in der sogenannten Hundegangfunktion das Arbeitsgerät stets nahezu präzise in Fahrtrichtung des Arbeitsfahrzeugs gehalten werden. Auf diese Weise wird zudem vermieden, dass das adaptierte Arbeitsgerät beispielsweise mit den Laufrädern des Arbeitsfahrzeugs kollidiert. Die Multifunktionalität einer solchen Ausführung wird dadurch noch gesteigert, dass zudem durch Aktivierung des zumindest einen Hubzylinders der Hubwelleneinheit und/oder der längenveränderlichen oberen und unteren Koppelelemente sowie des einen längenveränderlichen Verbindungselementes das an die Koppelstruktur adaptierte Arbeitsgerät eine Translationsbewegung in vertikaler Richtung und eine Rotationsbewegung um eine Längsachse ausführen kann. Eine optimale Umsetzung der verschiedenen Bewegungsabläufe der Koppelstruktur wird dann erreicht, wenn in einer vorteilhaften Ausgestaltung der Erfindung die längenveränderlichen Koppel- und Verbindungselemente und die starren Koppel- und Verbindungselemente jeweils rechtsseitig oder linksseitig der Anbauvorrichtung zugeordnet sind.

Analoge Effekte werden erzielt, wenn in einer weiteren vorteilhaften Ausgestaltung der Erfindung das Arbeitsfahrzeug wiederum gelenkte Fahrachsen umfasst, die eine Hundegangfunktion ermöglichen und jeweils die oberen und eines der unteren Koppelelemente und ein Verbindungselement der paarweise angeordneten Koppel- und Verbindungselemente längenveränderlich und die übrigen Koppel- und Verbindungselemente starr ausgebildet sind kann durch Aktivierung der längenveränderlichen Koppelelemente sowie des längenveränderlichen Verbindungselementes die Bewegung des an die Koppelstruktur adaptierten Arbeitsgerätes an die Lenkbewegung der Fahrzeugachsen gekoppelt werden. Darüber hinaus kann bei einer derartigen Struktur der Anbauvorrichtung durch Aktivierung des zumindest einen Hubzylinders der Hubwelleneinheit und/oder der längenveränderlichen Koppelelemente und des längenveränderlichen Verbindungselementes der Koppelstruktur das an die Koppelstruktur adaptierte Arbeitsgerät eine Translationsbewegung in vertikaler Richtung, eine Rotationsbewegung um die Querachse, eine Rotationsbewegung um eine Längsachse und/oder eine gesteuerte Seitenbewegung ausführen. Neben den bereits beschrieben Effekten erhöht sich hier so die Zahl der realisierbaren Freiheitsgarde bezüglich der Bewegung der Anbauvorrichtung weiter.

Die größte Zahl der Freiheitsgrade in der Bewegung der Anbauvorrichtung ergibt sich in einer vorteilhaften Weiterbildung der Erfindung dann, wenn die oberen und unteren Koppelelemente und ein Verbindungselement längenveränderlich und das weitere Verbindungselement starr ausgebildet sind und durch Aktivierung des zumindest einen Hubzylinders der Hubwelleneinheit und der längenveränderlichen Koppel- und Verbindungselemente das an die Koppelstruktur adaptierte Arbeitsgerät Translationsbewegungen entlang sowie Rotationsbewegungen um eine in Fahrzeuglängsrichtung, quer zur Fahrzeuglängsrichtung sowie in vertikaler Richtung orientierten Bewegungsachse ausführt.

In einer vorteilhaften Ausgestaltung der Erfindung kann die Translationsbewegung in und entgegen einer in Fahrzeuglängsrichtung orientierten Bewegungsachse zur Schwingungskompensation zwischen Arbeitsfahrzeug und adaptierten Arbeitsgerät herangezogen werden. Dies ist insbesondere dann von großem Interesse, wenn das Arbeitsgerät eine Kolbenpresse ist und die Bewegung der Koppelstruktur in und entgegen der Fahrzeuglängsrichtung zur Kompensation der von dem Presskolben hervorgerufenen Schwingungen eingesetzt wird.

In einer vorteilhaften Weiterbildung der Erfindung kann die Längenänderung der längenveränderlichen Koppelelemente und Verbindungselemente hydraulisch, mechanisch und/oder elektrisch bewirkt werden. In diesem Zusammenhang ist es auch von Vorteil, wenn das oder die starren Koppelelemente oder das wenigstens eine starre Verbindungselement Mittel zur manuellen Änderung ihrer Länge enthalten. Auf diese Weise wird es möglich, die Basisabmessungen der Koppelstruktur und damit der Anbauvorrichtung auf den jeweiligen Einsatzfall abzustimmen.

Niedrige Reaktionskräfte in der Hubwellenlagerung werden auch dadurch sichergestellt, dass die Lagerung der Hubwelle an der Tragrahmenstruktur des Arbeitsfahrzeugs und die Lagerung der unteren Koppelelemente an der Tragrahmenstruktur des Arbeitsfahrzeugs nahe zueinander erfolgt.

Die universelle Einsetzbarkeit der Anbauvorrichtung wird auch dadurch noch gesteigert, dass die dem Arbeitsfahrzeug abgewandten freien Enden der Koppelelemente und der Verbindungselemente unmittelbar an dem jeweiligen Arbeitsgerät oder an einem Koppelrahmen adaptierbar sind. Eine schnelle Adaption des Arbeitsgerätes an der Anbauvorrichtung wird auch dadurch unterstützt, wenn der Koppelrahmen im wesentlichen nach Art eines Einphasenkupplers ausgebildet ist und das jeweils das arbeitsgeräteseitige freie Ende der Koppelelemente und der Verbindungselemente an diesem angreift. Eine technisch bewährte Lösung der Gestaltung der Koppelpunkte ergibt sich dann, wenn die arbeitsgeräteseitigen Anlenkpunkte der oberen und unteren Koppelelemente und der Verbindungselemente als Kupplungshacken ausgebildet sind und die jeweils mit den korrespondierenden Anlenkpunkten des Arbeitsgerätes oder eines Koppelrahmens eine gelenkige Verbindung bilden.

In einer vorteilhaften Weiterbildung der Erfindung sind die arbeitsfahrzeugseitigen Anlenkpunkte der paarweise angeordneten unteren und oberen Koppelelemente sowie der Verbindungselemente jeweils zueinander beabstandet angeordnet, sodass die Positionierung zumindest eines Zapfwellengetriebes und/oder einer Zugvorrichtung zwischen diesen ermöglicht wird.

In einer weiteren vorteilhaften Ausgestaltung der Erfindung umfassen die arbeitsfahrzeugseitigen und die arbeitsgeräteseitigen Anlenkpunkte der Koppelelemente und der Verbindungselemente Lagerstellen mit zwei oder drei Freiheitsgraden. In einer bevorzugten Ausgestaltung können diese als Kugelgelenke ausgebildet sein. Eine Reduzierung der erforderlichen Koppelstellen kann auch dadurch erreicht werden, dass arbeitsfahrzeugseitig und/oder arbeitsgeräteseitig jeweils ein Koppelelement und ein Verbindungselement einen gemeinsamen, als Kugelgelenk ausgebildeten Anlenkpunkt aufweisen.

Indem die Koppelstruktur zumindest ein starres Verbindungselement umfasst, wird zudem sichergestellt, dass die Anbauvorrichtung in einer passiven Schwimmstellung betreibbar ist.

Ein präzises und schnell umsetzbares Seitenpendeln der erfindungsgemäßen Anbauvorrichtung wird dann erreicht, wenn in einer vorteilhaften Weiterbildung die paarweise angeordneten oberen Koppelelemente als doppelwirkende Hubzylinder ausgebildet sind und wobei jeweils die kolbenstangenseitigen und die kolbenflächenseitigen Druckkammern der Hubzylinder zum Austausch des Druckmediums miteinander verbunden sind.

Eine Reduzierung des an der Hubwelle angreifenden Drehmoments nimmt bei gleicher Lasteinleitung mit geringer werdendem Abstand zwischen den fahrzeugseitigen Anlenkpunkten der unteren Koppelelemente der Koppelstruktur ab. Es ist deshalb von Vorteil, wenn die arbeitsfahrzeugseitigen Anlenkpunkte der unteren Koppelelemente zwischen sich einen horizontalen Spreizabstand aufweisen und der Spreizabstand einstellbar ist.

Je nach Anwendungsfall kann die Anbauvorrichtung in einer vorteilhaften Weiterbildung der Erfindung dem Arbeitsfahrzeug frontseitig und/oder heckseitig zugeordnet sein.

In einer vorteilhaften Ausgestaltung der Erfindung bildet die Koppelstruktur den horizontalen und den vertikalen Momentanpol aus, wobei die Lage der Momentanpole einstellbar ist, sodass die Bewegungsabläufe und die von der Koppelstruktur durchlaufenen Bewegungsbahnen sehr variabel an unterschiedlichste Einsatzbedingungen anpassbar ist.

Zudem ist die erfindungsgemäße Anbauvorrichtung so beschaffen, dass die Bewegung der Koppelstruktur in vertikaler Richtung (34, 38) allein durch Druckbeaufschlagung oder Druckentlastung der die Hubwelleneinheit betätigenden Hubzylinder erfolgt. Auf diese Weise ist sichergestellt, dass auch in der technisch einfachsten Ausgestaltung die Koppelstruktur zumindest ein Heben und Senken eines adaptierten Anbaugerätes zulässt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine perspektivische Darstellung einer ersten Struktur der Anbauvorrichtung
- Figur 2: eine perspektivische Darstellung einer weiteren Struktur der Anbauvorrichtung bei Arbeitsfahrzeugen mit Hundegangfunktion
- Figur 3: eine perspektivische Darstellung einer weiteren Struktur der Anbauvorrichtung
- Figur 4: eine perspektivische Darstellung einer weiteren Struktur der Anbauvorrichtung
- Figur 5: eine perspektivische Darstellung der Anbauvorrichtung mit ausschließlich starren Koppelgliedern
- Figur 6: eine perspektivische Darstellung eines Details der Anbauvorrichtung

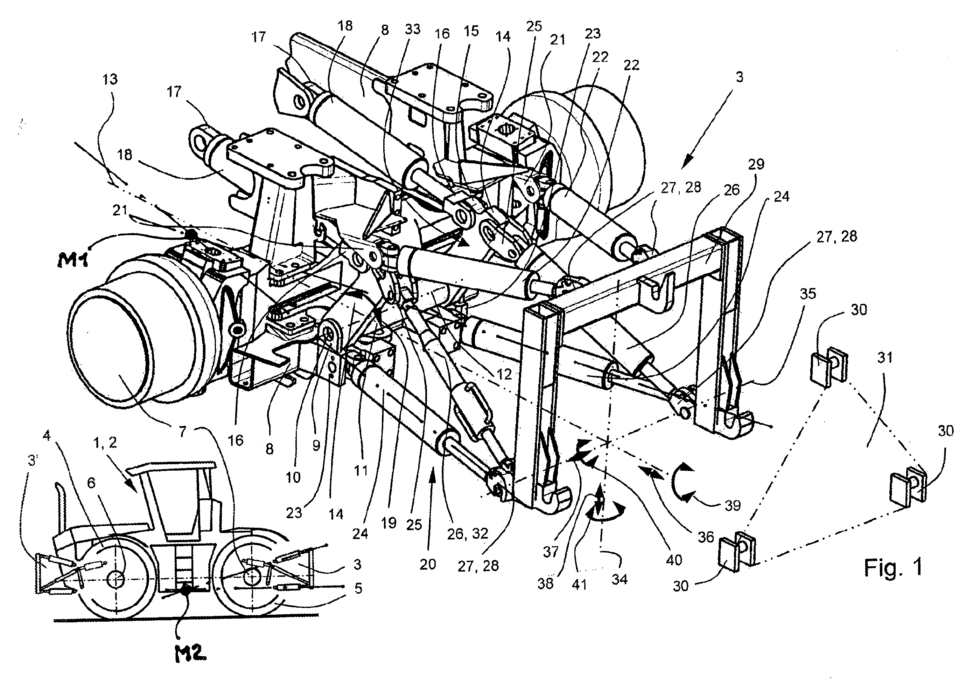

Fig. 1 zeigt ein als Schlepper 2 ausgeführtes Arbeitsfahrzeug 1 dem heckseitig die noch näher zu beschreibende Anbauvorrichtung 3 zugeordnet ist. Es liegt im Rahmen der Erfindung, dass die Anbauvorrichtung 3, 3' dem Schlepper 2 alternativ oder zugleich auch frontseitig zugeordnet sein kann. In an sich bekannter Weise verfügt der Schlepper 2 über jeweils eine, Laufräder 4, 5 aufnehmende Vorderachse 6 und Hinterachse 7. Im dargestellten Ausführungsbeispiel wird die Hinterachse 7 von einer, dem als Schlepper 2 ausgeführten Arbeitsfahrzeug 1 zugeordneten Tragrahmenstruktur 8 aufgenommen. In einem der Hinterachse 7 untenseitig zugeordneten Bereich sind der Tragrahmenstruktur 8 Lagerflansche 9 angeformt, die die Lagersitze 10 einer Hubwelle 11 in der Weise aufnehmen, dass sich die Drehachse 12 der Hubwelle 11 nahezu senkrecht zur Fahrzeuglängsachse 13 des Schleppers 2 erstreckt. Im Bereich der Lagersitze 10 sind der Hubwelle 11 Hubarme 14 angeformt, denen in ihrem obenseitigen, der Hinterachse 7 zugeordneten Bereich Halteflansche 15 angeformt sind, in welche schwenkbeweglich die kolbenstangenseitigen Enden 16 von zylinderseitig 17 ebenfalls schwenkbeweglich von der Tragrahmenstruktur 8 aufgenommenen Hubzylindern 18 eingreifen. Durch Druckbeaufschlagung oder Druckentlastung der Hubzylinder 18 werden die Hubarme 14 und damit die Hubwelle gemäß Pfeilrichtung 19 um die Drehachse 12 der Hubwelle 11 verschwenkt.

Zur Anlenkung der noch näher zu beschreibenden erfindungsgemäßen Koppelstruktur 20 sind der Tragrahmenstruktur 8 des Schleppers 2 in einem obenseitigen Bereich auf horizontal gleicher Höhe Halteflansche 21 zur schwenkbeweglichen Aufnahme der ersten, paarweise angeordneten oberen Koppelelemente 22 angeformt. In einem untenseitigen, vorzugsweise im Bereich der Lagerflansche 9 der Hubwelle 11 liegenden Bereich sind der Tragrahmenstruktur 8 des Schleppers 2 auf horizontal gleicher Höhe Halteflansche 23 zur schwenkbeweglichen Aufnahme der zweiten, paarweise angeordneten unteren Koppelelemente 24 angeformt. Zudem verfügen die Hubarme 14 der Hubwelle 11 in einem obenseitigen, der Hinterachse 7 abgewandten Bereich über weitere Halteflansche 25, die paarweise angeordnete Verbindungselemente 26 schwenkbeweglich aufnehmen. An ihren der Hinterachse 7 abgewandten freien Enden sind den oberen Koppelelementen 22, den unteren Koppelelementen 24 und den Verbindungselementen 26 noch näher zu beschreibende Anlenkpunkte 27 zugeordnet, die entweder schwenkbeweglich mit Koppelstellen 28 eines Koppelrahmens 29 oder unmittelbar mit Koppelstellen 30 eines an das Arbeitsfahrzeug 1 zu adaptierenden Arbeitsgerätes 31, wie etwa ein Pflug, verbindbar sind.

Aus Vereinfachungsgründen werden weitere Aspekte der Erfindung an einer Ausführung mit Koppelrahmen 29 beschrieben, obgleich die dargelegten Zusammenhänge in analoger Weise auch für Anbauvorrichtungen 3 gelten, die ohne Verwendung eines Koppelrahmens 29 unmittelbar mit dem jeweiligen Arbeitsgerät 31 verbunden sind. Fig. 1 zeigt die Ausführung der Koppelstruktur 20, bei der die Anbauvorrichtung 3 in sechs Freiheitsgraden betrieben werden kann. Hierfür ist es erforderlich, dass sowohl die oberen als auch die unteren Koppelsegmente 22, 24 sowie eines der die Hubwelle 11 mit dem Koppelrahmen 29 verbindenden Verbindungselemente 26 längenveränderlich, im einfachsten Fall als Hydraulikzylinder, ausgebildet sind. Das weitere der paarweise angeordneten Verbindungselemente 26 ist gemäß der Erfindung als starre Verbindungsstrebe 32 ausgebildet. Entweder durch separate oder aufeinander abgestimmte Druckbeaufschlagung und Druckentlastung der die Hubwelleneinheit 33 betätigenden Hubzylinder 18 oder der längenveränderlichen oberen und unteren Koppelelemente 22, 24 sowie der einen längenveränderlichen Verbindungsstrebe 26 kann der Koppelrahmen 29 und folglich das an ihn adaptierte Arbeitsgerät 31 Translationsbewegungen (Pfeilrichtungen 36-38) entlang sowie Rotationsbewegungen (Pfeilrichtungen 39-41) um eine in Fahrzeuglängsrichtung 13, quer zur Fahrzeuglängsrichtung 35 sowie in vertikaler Richtung 34 orientierte Bewegungsachse ausführen. Neben der völlig freien Bewegung des Koppelrahmens 29 im Raum kann beispielsweise die Translationsbewegung 36 des Koppelrahmens 29 entlag der Fahrzeuglängsachse 13 zur Schwingungskompensation zwischen adaptiertem Arbeitsgerät 31 und dem Arbeitsfahrzeug 1 genutzt werden. Eine solche Anwendung ist insbesondere dann hilfreich, wenn das adaptierte Arbeitsgerät 31 als nicht dargestellte und an sich bekannte Kolbenpresse ausgeführt ist, deren umlaufender, einen Arbeits- und einen Leerhub ausführender Presskolben bei herkömmlichen Anbauvorrichtungen 3 erhebliche Schwingungen in das Arbeitsfahrzeug 1 einleitet.

Indem eines der Verbindungselemente 26 als starre Verbindungsstrebe 32 ausgeführt ist, ist die Koppelstruktur 20 zugleich so beschaffen, dass die Anbauvorrichtung 3 in einer sogenannten passiven Schwimmstellung betrieben werden kann, in der ein an die Anbauvorrichtung 3 adaptiertes Arbeitsgerät 31 über den Boden gleiten kann, ohne dass die längenveränderlichen Koppel- und Verbindungselemente 22, 24 , 26 aktiv angesteuert werden müssen.

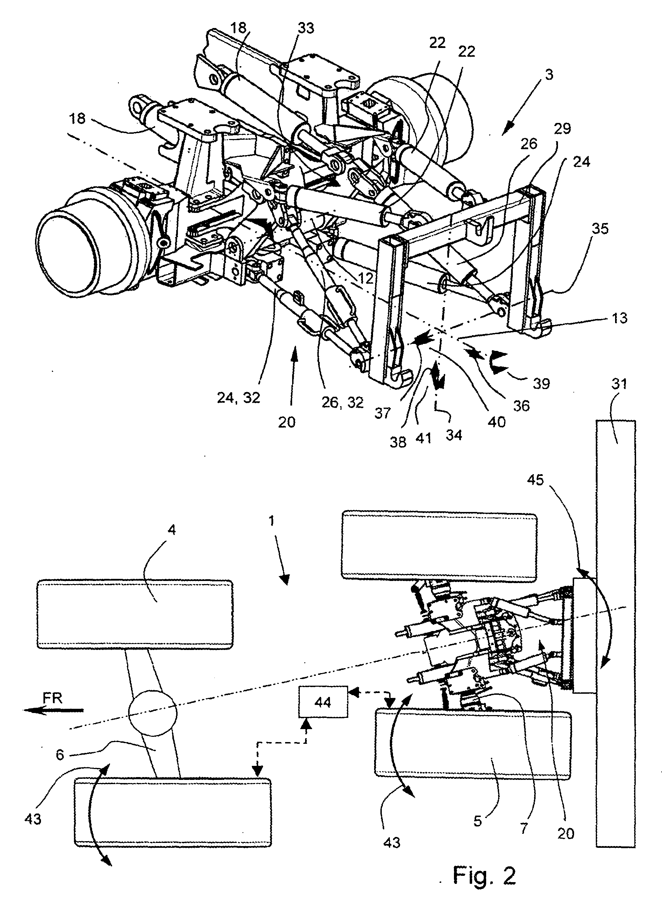

In einer weiteren Ausgestaltung der Erfindung gemäß Fig. 2 verfügt das Arbeitsfahrzeug 1 über eine sogenannte Hundegangfunktion. Dies bedeutet, dass die Laufräder 4, 5 der Vorder- und Hinterachse 6, 7 entweder einzeln oder achsweise lenkbar sind. Damit wird es möglich, dass das Arbeitsfahrzeug 1 so über den Boden 42 fahren kann, dass jedes Laufrad 4, 5 in einer separaten Spur läuft, was letztlich einer Bodenschädigung wegen Mehrfachüberrollung entgegenwirkt. Die erfindungsgemäße Koppelstruktur 20 der Anbauvorrichtung 3 umfasst in dieser Ausgestaltungsvariante längenveränderliche obere Koppelelemente 22, ein längenveränderliches unteres Koppelelement 24 und eine längenveränderliche Verbindungsstrebe 26 der jeweils paarweise angeordneten Koppelelemente 22, 24 und Verbindungstreben 26, wobei die Längenveränderlichkeit im einfachsten Fall durch Verwendung von Hubzylindern realisierbar ist. Die verbleibende Verbindungsstrebe 26 sowie eins der unteren Koppelelemente 24 sind als starre Verbindungsstrebe 32 ausgeführt. Durch Druckbeaufschlagung und Druckentlastung der als Hubzylinder ausgeführten längenveränderlichen Koppelelemente 22, 24 und des einen Verbindungselementes 26 kann die Bewegung des Koppelrahmens 29 und des an ihn adaptierte Arbeitsgerätes 31 an die Lenkbewegung 43 der Laufräder 4, 5 gekoppelt werden, sodass die Ausrichtung des Arbeitsgerätes 31 zur Ausrichtung der Laufräder 4,5 und damit zur Fahrtrichtung FR des Arbeitsfahrzeugs 1 nahezu unverändert bleibt. In einer bevorzugten Ausgestaltung wird der durch die Lenkbewegung 43 beschriebene Lenkwinkel der Laufräder 4,5 gemessen und in einer Auswerteinheit 44 in eine Schwenkbewegung 45 der Koppelstruktur 20 umgerechnet. Schließlich werden die längenveränderlichen Koppelelemente 22, 24 und das längenveränderliche Verbindungselement 26 so druckbeaufschlagt oder druckentlastet, dass die Koppelstruktur 20 die ermittelte Schwenkbewegung 45 ausführt.

Durch separate oder aufeinander abgestimmte Druckbeaufschlagung und Druckentlastung der die Hubwelleneinheit 33 betätigenden Hubzylinder 18 oder der längenveränderlichen oberen und unteren Koppelelemente 22, 24 sowie der einen längenveränderlichen Verbindungsstrebe 26 kann der Koppelrahmen 29 und folglich das an ihn adaptierte Arbeitsgerät 31 eine Translationsbewegung 38 in vertikaler Richtung 34, eine Rotationsbewegung 40 um die Querachse 35, eine Rotationsbewegung 39 um eine Längsachse 13 und/oder eine gesteuerte Seitenbewegung ausführt, wobei die gesteuerte Seitenbewegung die Rotation 41 um eine vertikale Schwenkachse 34 und eine Translationsbewegung 37 entlang der Querachse 35 umfasst. Bei einer solchen Ausführung entfällt die Translationsbewegung des Koppelrahmens 29 entlang der Fahrzeuglängsachse 13.

Das Arbeitsgerät 31 kann auch dann noch der Hundegangfunktion des Arbeitsfahrzeugs 1 nachgeführt werden, wenn beispielsweise aus Kostengründen nur jeweils eines der paarweise angeordneten oberen und unteren Koppelelemente 22, 24 sowie der Verbindungsstreben 26 längenveränderlich ausgebildet ist und die längenveränderlichen Koppelelemente 22, 24 und das längenveränderliche Verbindungselement 26 entweder linksseitig oder rechtsseitig der Anbauvorrichtung 3 und damit der Koppelstruktur 20 zugeordnet sind. In diesem Fall reduziert sich jedoch die Zahl der möglichen Freiheitsgrade weiter. Im hier vorliegenden Fall entfällt die Rotationsbewegung um die Querachse 35 und das Seitenpendeln basierend auf der blockierten Rotationsbewegung 41 um die vertikale Schwenkachse 34.

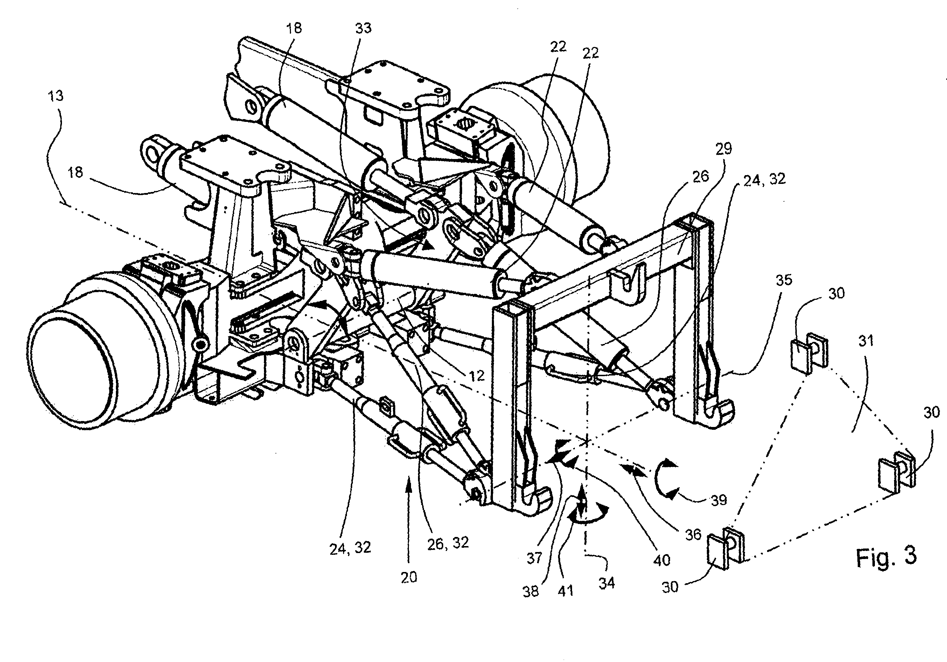

In einer weiteren Ausgestaltung der Erfindung gemäß Fig. 3 sind die oberen Koppelelemente 22 und ein Verbindungselement 26 längenveränderlich und das weitere Verbindungselement 26 und die unteren Koppelelemente 24 als starre Verbindungsstreben 32 ausgebildet. Durch Aktivierung der Hubzylinder 18 der Hubwelleneinheit 33 und/oder der längenveränderlichen Koppelelemente 22 und/oder des längenveränderlichen Verbindungselementes 26 kann das an die Koppelstruktur 20 adaptierte Arbeitsgerät 31 eine Translationsbewegung 38 entlang einer vertikalen Achse 34, eine Rotationsbewegung 40 um die Querachse 35, eine Rotationsbewegung 39 um die Fahrzeuglängsachse 13 und/oder eine gesteuerte Seitenbewegung, nämlich die Rotation 41 um eine vertikale Achse 34 und eine überlagerte Translationsbewegung 37 entlang der Querachse 35 ausführen.

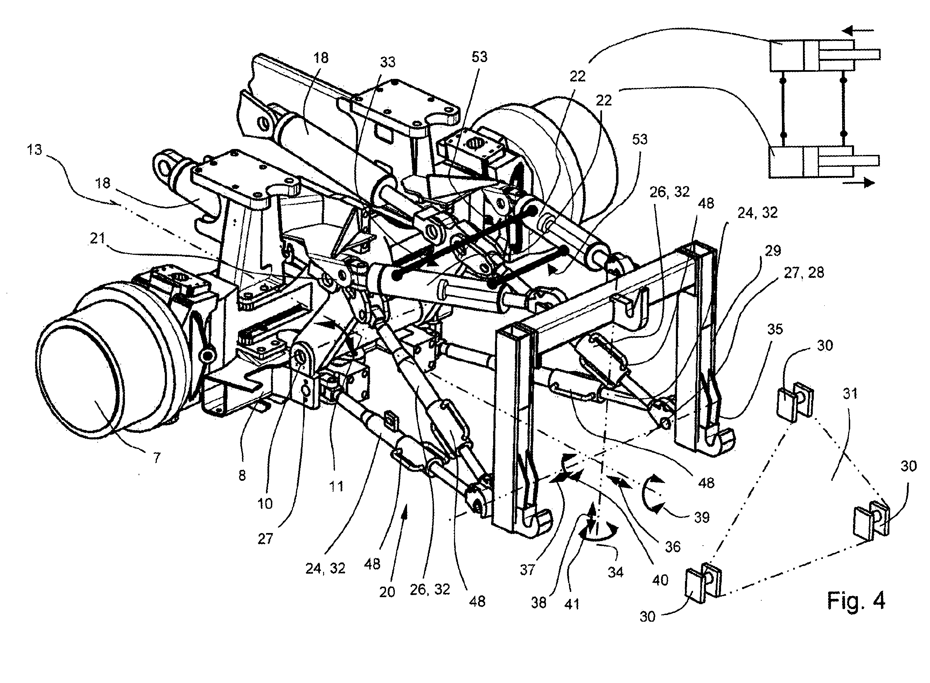

Indem nun gemäß Fig. 4 die oberen Koppelelemente 22 längenveränderlich und die Verbindungselemente 26 und die unteren Koppelelemente 24 als starre Verbindungsstreben 32 ausgebildet sind, werden die Herstellkosten für die Koppelstruktur 20 und damit die Anbauvorrichtung 3 weiter gesenkt. Bei einer solchen Struktur der Anbauvorrichtung 3 reduzieren sich die Freiheitsgrade weiter. Durch Aktivierung der Hubzylinder 18 der Hubwelleneinheit 33 und/oder der längenveränderlichen oberen Koppelelemente 22 führt das an die Koppelstruktur 20 adaptierte Arbeitsgerät 31 eine Translationsbewegung 38 entlang der vertikalen Schwenkachse 34, eine Rotationsbewegung 40 um die Querachse 35 und/oder eine gesteuerte Seitenbewegung, die sich, wie bereits beschrieben, aus der Rotation 41 um eine vertikale Achse 34 und eine überlagerte Translationsbewegung 37 entlang der Querachse 35 zusammensetzt, aus.

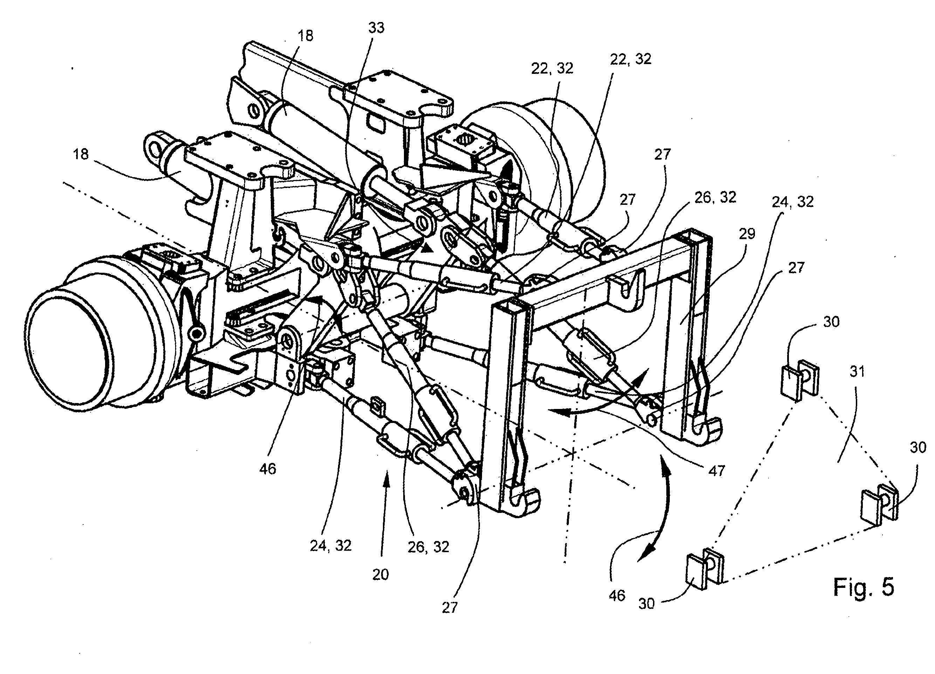

Indem nun gemäß Fig. 5 auch noch die oberen Koppelelemente 22 als starre Verbindungsstreben 32 ausgebildet sind, ergibt sich eine Koppelstruktur 20, die ausschließlich aus starren Verbinddungsstreben 32 besteht. Bei einer derartigen Struktur kann durch Druckbeaufschlagung oder Druckentlastung der mit der Hubwelleneinheit 33 gekoppelten Hubzylinder 18 ausschließlich eine vertikale Schwenkbewegung der Anbauvorrichtung 3 gemäß Pfeilrichtung 46 realisiert werden. Eine seitliche Pendelbewegung der Anbauvorrichtung 3 gemäß Pfeilrichtung 47 hängt von dem Lagerspiel in den verschiedenen Anlenkpunkten 27 ab und kann nicht zielgerichtet beeinflusst werden.

Weiter liegt es im Rahmen der Erfindung, dass die längenveränderlichen unteren und oberen Koppelelemente 22, 24 und das längenveränderliche Verbindungselement 26 auf hydraulischem, mechanischem oder elektrischem Weg in ihrer Länge verstellbar sind. Zudem können die starren Verbindungsstreben 32 gemäß Fig. 4 Mittel 48 zur manuellen Änderung der Länge der jeweiligen Verbindungsstrebe 32, wie etwa eine Gewindespindelanordnung aufweisen. Unabhängig davon, ob die jeweiligen Koppel- und Verbindungselemente 22, 24, 26 längenveränderlich oder starr ausgeführt sind, ergibt sich eine lastoptimierte Ausführung der Anbauvorrichtung 3 dann, wenn die fahrzeugachsenseitigen Anlenkpunkte 27 der unteren Koppelelemente 24 nahe den von der Tragrahmenstruktur 8 aufgenommenen Lagersitzen 10 der Hubwelle 11 an der Tragrahmenstruktur 8 positioniert sind.

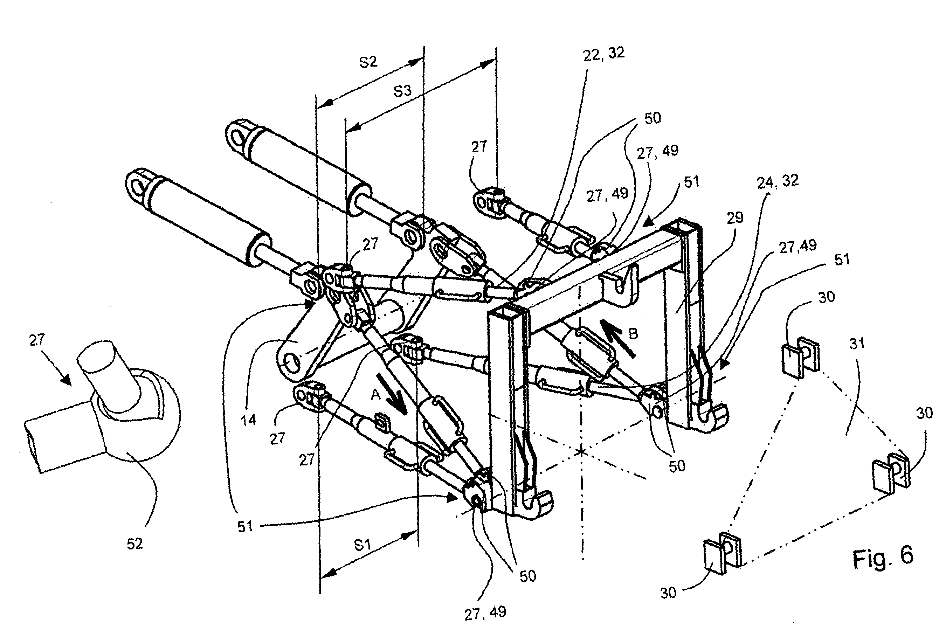

Gemäß Fig. 6 kann der Koppelrahmen 29 als sogenannter Einfasenkuppler ausgebildet sein. Dabei sind die dem Koppelrahmen 29 zugeordneten Anlenkpunkte 27 als zapfenförmige Stege 49 ausgebildet. Die koppelrahmenseitigen freien Enden der Koppelelemente 22, 24 und der Verbindungselemente 26 nehmen selbstschließende Kupplungshacken 50 auf, die selbstschließend in den zapfenförmigen Stegen 49 des Kopplungsrahmens 29 einrasten können. Der Kopplungsrahmen 29 verfügt arbeitsgeräteseitig über Aufnahmehacken, die schließlich mit den korrespondierenden Koppelstellen 30 des Arbeitsgerätes 31 in Eingriff bringbar sind. Es liegt im Rahmen der Erfindung, dass die Koppel- und Verbindungselemente 22, 24, 26 auch unmittelbar einem Arbeitsgerät 31 ohne Zwischenschaltung eines Koppelrahmens 29 zugeordnet sein können. Zudem können die arbeitsfahrzeugseitigen Anlenkpunkte 27 der paarweise angeordneten unteren und oberen Koppelelemente 22, 24 sowie der Verbindungselemente 26 jeweils zueinander einen Abstand S1 - S3 aufweisen, der die Positionierung zumindest eines nicht dargestellten Zapfwellengetriebes und/oder einer ebenfalls nicht dargestellten Zugvorrichtung zwischen diesen ermöglicht. Zudem kann der auch als Spreizabstand bezeichnete Abstand S1 der Anlenkpunkte 27 der unteren Koppelelemente 24 einstellbar sein, sodass die auf die Anbauvorrichtung 3 wirkenden Lasten weiter optimiert werden können. Je nach Beschaffenheit der in den arbeitsfahrzeugseitigen und arbeitsgeräteseitigen Anlenkpunkten 27 positionierten Lagerungen der Koppelelemente 22, 24 und der Verbindungselemente 26 können Lagerstellen 51 mit zwei oder drei Freiheitsgraden geschaffen werden. Es liegt im Rahmen der Erfindung, dass die Anlenkpunkte 27 als Kugelgelenke 52 ausgebildet sind und gegebenenfalls auch die Anlenkpunkte 27 verschiedener Koppel- und Verbindungselemente 22, 24, 26 zu einem gemeinsamen Kugelgelenk 52 zusammengefasst werden.

Sind gemäß der Fig. 4 die paarweise angeordneten oberen Koppelelemente 22 als Hubzylinder ausgeführt, kann die horizontale Pendelbewegung der Anbauvorrichtung 3 und damit die des Arbeitsgerätes dadurch einfach realisiert werden, dass jeweils die kolbenstangenseitigen und die kolbenflächenseitigen Druckkammern der Hubzylinder zum Austausch des Druckmediums miteinander über Leitungssysteme und entsprechende Schaltventile 53 verbunden sind.

In an sich bekannter Weise bilden die verschwenkbar in die Koppelstruktur 20 integrierten Koppelelemente 22, 24 zum Verschwenken der Koppelstruktur 20 in einer horizontalen und vertikalen Ebene gemäß Fig. 1 jeweils einen so genannten horizontalen und vertikalen Momentanpol M1, M2 aus, der in Abhängigkeit von der einstellbaren Geometrie der Koppelstruktur änderbar ist.

### Bezugszeichenliste;

- 1: Arbeitsfahrzeug
- 2: Schlepper
- 3: Anbauvorrichtung
- 4: Laufrad
- 5: Laufrad
- 6: Vorderachse
- 7: Hinterachse
- 8: Tragrahmenstruktur
- 9: Lagerflansch
- 10: Lagersitz
- 11: Hubwelle
- 12: Schwenkachse
- 13: Fahrzeuglängsachse
- 14: Hubarm
- 15: Halteflansch
- 16: kolbenstangenseitiges Ende
- 17: zylinderseitiges Ende
- 18: Hubzylinder
- 19: Pfeilrichtung
- 20: Koppelstruktur
- 21: Halteflansch
- 22: oberes Koppelelement
- 23: Halteflansch
- 24: Unteres Koppelelement
- 25: Halteflansch
- 26: Verbindungselement
- 27: Anlenkpunkt
- 28: Koppelstelle
- 29: Koppelrahmen
- 30: Koppelstelle

- 31: Arbeitsgerät
- 32: Verbindungsstrebe
- 33: Hubwelleneinheit
- 34: vertikale Schwenkachse
- 35: Querachse
- 36-38: Translationsbewegung
- 39-41: Rotationsbewegung
- 42: Boden
- 43: Lenkbewegung
- 44: Auswerteinheit
- 45: Schwenkbewegung
- 46: Pfeilrichtung
- 47: Pfeilrichtung
- 48: Längenänderungsmittel
- 49: Steg
- 50: Kupplungshacken
- 51: Lagerstelle
- 52: Kugelgelenk
- 53: Leitungssystem

- FR: Fahrrichtung
- S1: Abstand
- S2: Abstand
- S3: Abstand

## Patentansprüche

1. Arbeitsfahrzeug mit einer Anbauvorrichtung zur Koppelung eines Arbeitsgerätes (31) an das Arbeitsfahrzeug (1) eine In der Tragrahmenstruktur (8) des Arbeitsfahrzeugs (1) gelagerte Hubwelleneinheit (33) und eine mit dieser in Wirkverbindung stehende Koppelstruktur (20) umfassend, wobei die Hubwelleneinheit (33) eine Hubwelle (11), zumindest einen mit der Hubwelle (11) fest verbundenen Hubarm (14) und wenigstens einen mit dem Hubarm (14) gelenkig verbundenen Hubzylinder (18) umfasst,
**dadurch gekennzeichnet,**
**dass** die Koppelstruktur (20) erste gelenkig an der Tragrahmenstruktur (8) angeordnete obere Koppelelemente (22), zweite gelenkig an der Tragrahmenstruktur (8) angelenkte untere Koppelelemente (24) und gelenkig an Hubarmen (14) der Hubwelle (11) angeordnete Verbindungselemente (26) umfasst und wobei zumindest eines der verbindungselements (26) starr ausgebildet ist.

2. Arbeitsfahrzeug mit einer Anbauvorrichtung nach Anspruch 1,
**dadurch gekennzeichnet,**
**dass** wahlwelse eines oder mehrere der Koppelelemente (22, 24) und Verbindungselemente (26) starr und die übrigen Koppelelemente (22, 24) und Varbindungselemente (26) längenveränderlich ausgebildet sind.

3. Arbeitsfahrzeug mit einer Anbauvorrichtung nach einem der vorhergehenden Ansprüche,
**dadurch gekennzeichnet,**
**dass** die oberen und unteren Koppelelemente (22, 24) und die Verbindungselemente (26) der Koppelstruktur (20) paarweise angeordnet sind.

4. Arbeitsfahrzeug mit einer Anbauvorrichtung nach Anspruch 3,
**dadurch gekennzeichnet,**
**dass** die Koppel- und Verbindungsstreben (22, 24, 26) starr ausgebildet sind und durch Aktivierung des zumindest einen Hubzylinders (18) der Hubwelleneinheit (33) das an die Koppelstruktur (20) adaptierte Arbeitsgerät (31) eine vertikal Schwenkbewegung (46) ausführt.

5. Arbeitsfahrzeug mit einer Anbauvorrichtung nach Anspruch 3,
**dadurch gekennzeichnet,**
**dass** die oberen Koppelelemente (22) längenveränderlich und die Verbindungselemente (26) und die unteren Koppelelemente (24) starr ausgebildet sind und durch Aktivierung des zumindest einen Hubzylinders (18) der Hubwelleneinheit (33) und/oder der längenveränderlichen oberen Koppelelemente (22) das an die Koppelstruktur (20) adaptierte Arbeitsgerät (31) eine Translationsbewegung (38) in Richtung der vertikalen Schwenkachse (34), eine Rotationsbewegung (40) um die Querachse (35) und/oder eine gesteuerte Seitenbewegung, die sich aus der Rotation (41) um die vertikale Schwenkachse (34) und eine überlagerte Translationsbewegung (37) entlang der Querachse (35) zusammensetzt, ausführt.

6. Arbeitsfahrzeug mit einer Anbauvorrichtung nach Anspruch 3,
**dadurch gekennzeichnet,**
**dass** die oberen Koppelelemente (22) und ein Verbindungselement (26) längenveränderlich und das weitere Verbindungselement (26) und die unteren Koppelelemente (24) starr ausgebildet sind und durch Aktivierung des zumindest einen Hubzylinders (18) der Hubwelleneinheit (33) und/oder der längenveränderlichen Koppelelemente (22) und/oder des längenveränderlichen Verbindungselementes (26) das an die Koppelstruktur (20) adaptierte Arbeitsgerät (31) eine Translationsbewegung (38) entlang einer vertikalen Achse (34), eine Rotationsbewegung (40) um die Querachse (35), eine Rotationsbewegung (39) um die Fahrzeuglängsachse (13) und/oder eine gesteuerte Seitenbewegung, die sich aus der Rotation (41) um die vertikale Schwenkachse (34) und eine überlagerte Transiationsbewegung (37) entlang der Querachse (35) zusammensetzt, ausführt.

7. Arbeitsfahrzeug mit einer Anbauvorrichtung nach Anspruch 3,
**dadurch gekennzeichnet,**
**dass** das Arbeitsfahrzeug (1) gelenkte Fahrachsen (6, 7) umfasst, die eine Hundegangfunktion ermöglichen und wobei jeweils eines der unteren und oberen Koppelelemente (22, 24) und ein Verbindungselement (26) der paarweise angeordneten Koppel- und Verbindungselemente (22, 24, 26) starr und das weitere jeweils längenveranderlich ausgebildet ist und durch Aktivierung zumindest der längenveränderilchen unteren und oberen Koppelelemente (22, 24) sowie des längenveränderlichen Verbindungselementes (26) die Bewegung des an die Koppelstruktur (20) adaptierten Arbeitsgerätes (31) an die Lenkbewegung der Fahrzeugachsen (6, 7) koppelbar ist.

8. Arbeitsfahrzeug mit einer Anbauvorrichtung nach Anspruch 7,
**dadurch gekennzeichnet,**
**dass** durch Aktivierung des zumindest einen Hubzylinders (18) der Hubwelleneinheit (33) und/oder der längenveränderilchen oberen und unteren Koppelelemente (22, 24) sowie des einen längenveränderlichen Verbindungselementes (26) das an die Koppelstruktur (20) adaptierte Arbeitsgerät (31) eine Translationsbewegung (38) in vertikaler Richtung (34) und eine Rotationsbewegung (39) um die Fahrzeuglängsachse (13) ausführt.

9. Arbeitsfahrzeug mit einer Anbauvorrichtung nach einem der Ansprüche 7-8,
**dadurch gekennzeichnet,**
**dass** die längenveränderlichen Koppel- und Verbindungselemente (22, 24, 26) und die starren Koppel- und Verbindungselemente (22, 24, 26) jeweils rechtseitig oder linksseitig der Anbauvorrichtung (3) zugeordnet sind.

10. Arbeltsfahrzeug mit einer Anbauvorrichtung nach Anspruch 3,
**dadurch gekennzeichnet,**
**dass** das Arbeitsfahrzeug (1) gelenkte Fahrachsen (6, 7) umfasst, die eine Hundegangfunktion ermöglichen und wobei jeweils die oberen und eines der unteren Koppelelemente (22, 24) und ein Verbindungselement (26) der paarweise angeordneten Koppelelemente (22, 24) und Verbindungselemente (26) längenveränderlich und die übrigen Koppel- und Verbindungselemente (22, 24, 26) starr ausgebildet sind und durch Aktivierung der längenveränderlichen Koppelelemente (22, 24) sowie des längenveränderlichen Verbindungselementes (26) die Bewegung des an die Koppelstruktur (20) adaptierten Arbeitsgerätes (31) an die Lenkbewegung der Fahrzeugachsen (6, 7) koppelbar ist.

11. Arbeitsfahrzeug mit einer Anbauvorrichtung nach Anspruch 10,
**dadurch gekennzeichnet,**
**dass** durch Aktivierung des zumindest einen Hubzylinders (18) der Hubwelleneinheit (33) und/oder der längenveränderlichen Koppelelemente (22, 24) und des längenveränderlichen Verbindungselementes (26) der Koppelstruktur (20) das an die Koppelstruktur (20) adaptierte Arbeitsgerät (1) eine Translationsbewegung (38) In vertikaler Richtung (34), eine Rotationsbewegung (40) um die Querachse (35), eine Rotationsbewegung (39) um die Fahrzeuglängsachse (13) und/oder eine gesteuerte Seitenbewegung, die sich aus der Rotation (41) um die vertikale Achse (34) und einer überlagerten Translationsbewegung (37) entlang der Querachse (35) zusammensetzt, ausführt.

12. Arbeitsfahrzeug mit einer Anbauvorrichtung nach Anspruch 3,
**dadurch gekennzeichnet,**
**dass** die oberen und unteren Koppelelemente (22, 24) und ein Verbindungselement (26) längenveränderllch und das weitere Verbindungselement (26) starr ausgebildet sind und durch Aktivierung des zumindest einen Hubzylinders (18) der Hubwelleneinheit (33) und der längenveränderlichen Koppelelemente (22, 24) sowie des längenveränderlichen Verbindungselementes (26) das an die Koppelstruktur (20) adaptierte Arbeitsgerät (31) Translationsbewegungen (36, 37, 38) entlang sowie Rotationsbewegungen (39, 40, 41) um eine in Fahrzeuglängsrichtung, quer zur Fahrzeuglängsrichtung sowie in vertikaler Richtung orientierten Bewegungsachse (13, 34, 35) ausführt.

13. Arbeitsfahrzeug mit einer Anbauvorrichtung nach Anspruch 12,
**dadurch gekennzeichnet,**
**dass** die Translationsbewegung (36) in und entgegen einer in Fahrzeuglängsrichtung orientierten Bewegungsachse (13) zur Schwingungskompensation zwischen Arbeitsfahrzeug (1) und adaptierten Arbeitsgerät (31) herangezogen wird.

14. Arbeitsfahrzeug mit einer Anbauvorrichtung nach Anspruch 13,
**dadurch gekennzeichnet,**
**dass** das Arbeitsgerät (31) eine Kolbenpresse ist und die relative Bewegung der Koppelstruktur (20) in und entgegen der Fahrzeuglängsrichtung (13) zur Kompensation der von dem Presskolben hervorgerufenen Schwingungen vom Arbeitsgerät eingesetzt wird.

15. Arbeitsfahrzeug mit einer Anbauvorrichtung nach einem der vorhergehenden Ansprüche,
**dadurch gekennzeichnet,**
**dass** die Längenänderung der längenveränderlichen Koppel- und Verbindungselemente (22, 24, 26) hydraulisch, mechanisch und/oder elektrisch erfolgt.

16. Arbeitsfahrzeug mit einer Anbauvorrichtung nach Anspruch 15,
**dadurch gekennzeichnet,**
**dass** zumindest ein starres Koppelelement (22, 24) und/oder eine starre verbindungsstrebe (26) Mittel (48) zur manuellen Änderung der Länge umfasst.

17. Arbeitsfahrzeug mit einer Anbauvorrichtung nach einem der vorhergehenden Ansprüche,
**dadurch gekennzeichnet,**
**dass** die Lagerung (10) der Hubwelle (11) an der Tragrahmenstruktur (8) des Arbeitsfahrzeugs (1) und die Lagerung (23, 27) der unteren Koppelelemente (24) an der Tragrahmenstruktur (8) des Arbeitsfahrzeugs (1) nahe zueinander erfolgt.

18. Arbeitsfahrzeug mit einer Anbauvorrichtung nach einem der vorhergehenden Ansprüche,
**dadurch gekennzeichnet,**
**dass** die dem Arbeitsfahrzeug (1) abgewandten freien Enden der Koppel- und Verbindungselemente (22,24,26) unmittelbar an dem jeweiligen Arbeitsgerät (31) oder an einem Koppelrahmen (29) adaptiert werden.

19. Arbeitsfahrzeug mit einer Anbauvorrichtung nach Anspruch 18,
**dadurch gekennzeichnet,**
**dass** der Koppelrahmen (29) im wesentlichen nach Art eines Einphasenkupplers ausgebildet ist und das jeweils das arbeitsgeräteseitige freie Ende der Koppel- und Verbindungselemente (22, 24, 26) an diesem angreift.

20. Arbeitsfahrzeug mit einer Anbauvorrichtung nach einem der vorhergehenden Ansprüche,
**dadurch gekennzeichnet,**
**dass** die arbeitsgeräteseitigen Anlenkpunkte (27) der oberen und unteren Koppelelemente (22, 24) und der Verbindungselemente (26) als Kupplungshacken (50) ausgebildet sind und die jewells mit den korrespondierenden Anlenkpunkten (27) des Arbeitsgerätes (31) oder eines Koppelrahmens (29) eine gelenkige Verbindung bilden.

21. Arbeitsfahrzeug mit einer Anbauvorrichtung nach einem der vorhergehenden Ansprüche,
**dadurch gekennzeichnet,**
**dass** die arbeitsfahrzeugseitigen Anlenkpunkte (27) der paarweise angeordneten unteren und oberen Koppelelemente (22, 24) sowie der Verbindungselemente (26) jeweils zueinander einen Abstand (S1-S3) aufweisen der die Positionierung zumindest eines Zapfwellengetriebes und/oder einer Zugvorrichtung zwischen diesen ermöglicht.

22. Arbeitsfahrzeug mit einer Anbauvorrichtung nach einem der vorhergehenden Ansprüche,
**dadurch gekennzeichnet,**
**dass** die arbeitsfahrzeugseitigen und die arbeitsgeräteseitigen Anlenkpunkte (27) der Koppel- und Verbindungselemente (22, 24, 26) Lagerstellen (51) mit zwei oder drei Freiheitsgraden beinhalten.

23. Arbeitsfahrzeug mit einer Anbauvorrichtung nach einem der vorhergehenden Ansprüche,
**dadurch gekennzeichnet,**
**dass** arbeitsfahrzeugseitig und/oder arbeitageräteseltig jeweils ein Koppelelement (22, 24) und ein Verbindungselement (26) einen gemeinsamen, als Kugelgelenk (52) ausgebildeten Anlenkpunkt (27) aufweisen.

24. Arbeitsfahrzeug mit einer Anbauvorrichtung nach einem der vorhergehenden Ansprüche,
**dadurch gekennzeichnet,**
**dass** die Koppelstruktur (20) mittels der Hubwelle in einer passiven Schwimmstellung betreibbar ist.

25. Arbeitsfahrzeug mit einer Anbauvorrichtung nach einem der vorhergehenden Ansprüche,
**dadurch gekennzeichnet,**
**dass** die paarweise angeordneten oberen Koppelelemente (22) als doppelwirkende Hubzylinder ausgebildet sind und wobei jeweils die kolbenstangenseitigen und die kolbenflächenseltigen Druckkammern der Hubzylinder zum Austausch des Druckmediums miteinander verbunden sind.

26. Arbeitsfahrzeug mit einer Anbauvorrichtung nach einem der vorhergehenden Ansprüche,
**dadurch gekennzeichnet,**
**dass** die arbeitsfahrzeugseltigen Anlenkpunkte (27) der unteren Koppelelemente (24) zwischen sich einen horizontalen Spreizabstand (S3) aufweisen und wobei der Spreizabstand (S3) einstellbar ist.

27. Arbeitsfahrzeug mit einer Anbauvorrichtung nach einem der vorhergehenden Ansprüche,
**dadurch gekennzeichnet,**
**dass** die Anbauvorrichtung (3) dem Arbeitsfahrzeug (1) frontseitig und/oder heckseitig zugeordnet ist.

28. Arbeitsfahrzeug mit einer Anbauvorrichtung nach einem der vorhergehenden Ansprüche,
**dadurch gekennzeichnet,**
**dass** die Koppelstruktur (20) in Abhängigkeit von Lage der Koppelelemente (22, 24) im Raum den horizontalen und den vertikalen Momentanpol (M1, M2) ausbildet und wobei die Lage der Momentanpole (M1, M2) einstellbar ist.

29. Arbeitsfahrzeug mit einer Anbauvorrichtung nach einem der vorhergehenden Ansprüche,
**dadurch gekennzeichnet,**
**dass** die Bewegung der Koppelstruktur (20) in vertikaler Richtung (34, 38) allein durch Druckbeaufschlagung der Druckentlastung der die Hubwelleneinheit (33) betätigenden Hubzylinder (18) erfolgt.

## Claims

1. A working vehicle having an attachment device for coupling a working implement (31) to the working vehicle (1), including a lift shaft unit (33) mounted in the carrier frame structure (8) of the working vehicle (1) and a coupling structure (20) operatively connected to the lift shaft unit, wherein the lift shaft unit (33) includes a lift shaft (11), at least one lift arm (14) fixedly connected to the lift shaft (11) and at least one lift cylinder (18) pivotably connected to the lift arm (14),
**characterised in that**
the coupling structure (20) includes first upper coupling elements (22) arranged pivotably on the carrier frame structure (8), second lower coupling elements (24) pivotably connected to the carrier frame structure (8) and connecting elements (26) arranged pivotably on lift arms (14) of the lift shaft (11) and wherein at least one of the connecting elements (26) is rigid.

2. A working vehicle having an attachment device according to claim 1 **characterised in that** selectively one or more of the coupling elements (22, 24) and connecting elements (26) is or are rigid and the other coupling elements (22, 24) and connecting elements (26) are variable in length.

3. A working vehicle having an attachment device according to one of the preceding claims **characterised in that** the upper and lower coupling elements (22, 24) and the connecting elements (26) of the coupling structure (20) are arranged in pairs.

4. A working vehicle having an attachment device according to claim 3 **characterised in that** the coupling and connecting struts (22, 24, 26) are rigid and by activation of the at least one lift cylinder (18) of the lift shaft unit (33) the working implement (31) adapted to the coupling structure (20) performs a vertical pivotal movement (46).

5. A working vehicle having an attachment device according to claim 3 **characterised in that** the upper coupling elements (22) are variable in length and the connecting elements (26) and the lower coupling elements (24) are rigid and by activation of the at least one lift cylinder (18) of the lift shaft unit (33) and/or the variable-length upper coupling elements (22) the working implement (31) adapted to the coupling structure (20) performs a translatory movement (38) in the direction of the vertical pivot axis (34), a rotational movement (40) about the transverse axis (35) and/or a controlled lateral movement which is composed of the rotation (41) about the vertical pivot axis (34) and a superimposed translatory movement (37) along the transverse axis (35).

6. A working vehicle having an attachment device according to claim 3 **characterised in that** the upper coupling elements (22) and a connecting element (26) are variable in length and the further connecting element (26) and the lower coupling elements (24) are rigid and by activation of the at least one lift cylinder (18) of the lift shaft unit (33) and/or the variable-length coupling elements (22) and/or the variable-length connecting element (26) the working implement (31) adapted to the coupling structure (20) performs a translatory movement (38) along a vertical axis (34), a rotational movement (40) about the transverse axis (35), a rotational movement (39) about the longitudinal axis (13) of the vehicle and/or a controlled lateral movement which is composed of the rotation (41) about the vertical pivot axis (34) and a superimposed translatory movement (37) along the transverse axis (35).

7. A working vehicle having an attachment device according to claim 3 **characterised in that** the working vehicle (1) includes steered axles (6, 7) which permit a crab steering function and wherein a respective one of the lower and upper coupling elements (22, 24) and a connecting element (26) of the coupling and connecting elements (22, 24, 26) arranged in pairs are rigid and the further respective one is variable in length and by activation at least of the variable-length lower and upper coupling elements (22, 24) and the variable-length connecting element (26) the movement of the working implement (31) adapted to the coupling structure (20) can be coupled to the steering movement of the vehicle axes (6, 7).

8. A working vehicle having an attachment device according to claim 7 **characterised in that** by activation of the at least one lift cylinder (18) of the lift shaft unit (33) and/or the variable-length upper and lower coupling elements (22, 24) as well as the one variable-length connecting element (26) the working implement (31) adapted to the coupling structure (20) performs a translatory movement (38) in a vertical direction (34) and a rotational movement (39) about the longitudinal axis (13) of the vehicle.

9. A working vehicle having an attachment device according to one of claims 7 and 8 **characterised in that** the variable-length coupling and connecting elements (22, 24, 26) and the rigid coupling and connecting elements (22, 24, 26) are respectively associated with the attachment device (3) at the right or left side.

10. A working vehicle having an attachment device according to claim 3 **characterised in that** the working vehicle (1) includes steered axles (6, 7) which permit a crab steering function and wherein respectively the upper and one of the lower coupling elements (22, 24) and a connecting element (26) of the coupling elements (22, 24) and connecting elements (26) arranged in pairs are variable in length and the other coupling and connecting elements (22, 24, 26) are rigid and by activation of the variable-length coupling elements (22, 24) and the variable-length connecting element (26) the movement of the working implement (31) adapted to the coupling structure (20) can be coupled to the steering movement of the vehicle axles (6, 7).

11. A working vehicle having an attachment device according to claim 10 **characterised in that** by activation of the at least one lift cylinder (18) of the lift shaft unit (33) and/or the variable-length coupling elements (22, 24) and the variable-length connecting element (28) of the coupling structure (20) the working implement (1) adapted to the coupling structure (20) performs a translatory movement (38) in a vertical direction (34), a rotational movement (40) about the transverse axis (35), a rotational movement (39) about the longitudinal axis (13) of the vehicle and/or a controlled lateral movement composed of the rotation (41) about the vertical axis (34) and a superimposed translatory movement (37) along the transverse axis (35).

12. A working vehicle having an attachment device according to claim 3 **characterised in that** the upper and lower coupling elements (22, 24) and a connecting element (26) are variable in length and the further connecting element (26) is rigid and by activation of the at least one lift cylinder (18) of the lift shaft unit (33) and the variable-length coupling elements (22, 24) as well as the variable-length connecting element (26) the working implement (31) adapted to the coupling structure (20) performs translatory movements (36, 37, 38) along and rotational movements (39, 40, 41) about a motion axis (13, 34, 35) oriented in the longitudinal direction of the vehicle, transversely relative to the longitudinal direction of the vehicle and in the vertical direction.

13. A working vehicle having an attachment device according to claim 12 **characterised in that** the translatory movement (36) in and in opposite relationship to a motion axis (13) oriented in the longitudinal direction of the vehicle is used for oscillation compensation between the working vehicle (1) and the adapted working implement (31).

14. A working vehicle having an attachment device according to claim 13 **characterised in that** the working implement (31) is a piston press and the relative movement of the coupling structure (20) in and in opposite relationship to the longitudinal direction of the vehicle (13) is used to compensate for the oscillations, caused by the pressing piston, of the working implement.

15. A working vehicle having an attachment device according to one of the preceding claims **characterised in that** the variation in length of the variable-length coupling and connecting elements (22, 24, 26) is effected hydraulically, mechanically and/or electrically.

16. A working vehicle having an attachment device according to claim 15 **characterised in that** at least one rigid coupling element (22, 24) and/or a rigid connecting strut (26) includes means (48) for manually changing the length.

17. A working vehicle having an attachment device according to one of the preceding claims **characterised in that** the mounting (10) of the lift shaft (11) to the carrier frame structure (8) of the working vehicle (1) and the mounting (23, 27) of the lower coupling elements (24) to the carrier frame structure (8) of the working vehicle (1) are effected close to each other.

18. A working vehicle having an attachment device according to one of the preceding claims **characterised in that** the free ends, remote from the working vehicle (1), of the coupling and connecting elements (22, 24, 26) are directly adapted to the respective working implement (31) or to a coupling frame (29).

19. A working vehicle having an attachment device according to claim 18 **characterised in that** the coupling frame (29) is substantially in the nature of a single-phase coupler and the respective free end, at the working implement side, of the coupling and connecting elements (22, 24, 26) engages same.

20. A working vehicle having an attachment device according to one of the preceding claims **characterised in that** the pivotal mounting points (27), at the working implement side, of the upper and lower coupling elements (22, 24) and the connecting elements (26) are in the form of coupling hooks (50) and the respective ones form a pivotable connection with the corresponding pivotal mounting points (27) of the working implement (31) or a coupling frame (29).

21. A working vehicle having an attachment device according to one of the preceding claims **characterised in that** the pivotal mounting points (27), at the working vehicle side, of the lower and upper coupling elements (22, 24) arranged in pairs and the connecting elements (26) respectively are at a spacing (S1-S3) relative to each other which permits the positioning of at least one power take-off drive and/or a traction device between them.

22. A working vehicle having an attachment device according to one of the preceding claims **characterised in that** the pivotal mounting points (27), which are at the working vehicle side and at the working implement side, of the coupling and connecting elements (22, 24, 26) include mounting locations (51) having two or three degrees of freedom.

23. A working vehicle having an attachment device according to one of the preceding claims **characterised in that** at the working vehicle side and/or the working implement side a respective coupling element (22, 24) and a respective connecting element (26) have a common pivotal mounting point (27) in the form of a ball joint (52).

24. A working vehicle having an attachment device according to one of the preceding claims **characterised in that** the coupling structure (20) is operable by means of the lift shaft in a passive floating position.

25. A working vehicle having an attachment device according to one of the preceding claims **characterised in that** the upper coupling elements (22) arranged in pairs are in the form of double-acting lift cylinders and wherein the piston rod-side and the piston surface-side pressure chambers of the lift cylinders are respectively connected together for the interchange of the pressure medium.

26. A working vehicle having an attachment device according to one of the preceding claims **characterised in that** the pivotal mounting points (27), at the working vehicle side, of the lower coupling elements (27) have a horizontal spreading spacing (S3) between them and wherein the spreading spacing (S3) is adjustable.

27. A working vehicle having an attachment device according to one of the preceding claims **characterised in that** the attachment device (3) is associated with the working vehicle (1) at the front and/or the rear.

28. A working vehicle having an attachment device according to one of the preceding claims **characterised in that** the coupling structure (20) affords the horizontal and the vertical instantaneous pole (M1, M2) in dependence on the position of the coupling elements (22, 24) in space and wherein the position of the instantaneous poles (M1, M2) is adjustable.

29. A working vehicle having an attachment device according to one of the preceding claims **characterised in that** the movement of the coupling structure (20) in the vertical direction (34, 38) is effected solely by pressure actuation and pressure relief of the lift cylinders (18) actuating the lift shaft unit (33).

## Revendications

1. Véhicule de travail avec un dispositif d'attelage servant à accoupler un outil de travail (31) au véhicule de travail (1), comprenant une unité d'arbre de levage (33) montée dans la structure de bâti porteur (8) du véhicule de travail (1) et une structure de couplage (20) en liaison fonctionnelle avec celle-ci, l'unité d'arbre de levage (33) comprenant un arbre de levage (11), au moins un bras de levage (14) solidarisé à l'arbre de levage (11) et au moins un vérin (18) relié de façon articulée au bras de levage (14), **caractérisé en ce que** la structure de couplage (20) comprend des premiers éléments de couplage supérieurs (22) disposés de façon articulée sur la structure de bâti porteur (8), des seconds éléments de couplage inférieurs (24) disposés de façon articulée sur la structure de bâti porteur (8), et des éléments de liaison (26) disposés de façon articulée sur des bras de levage (14) de l'arbre de levage (11), au moins un des éléments de liaison (26) étant conçu rigide.

2. Véhicule de travail avec un dispositif d'attelage selon la revendication 1, **caractérisé en ce que**, au choix, un ou plusieurs des éléments de couplage (22, 24) et éléments de liaison (26) sont conçus rigides et les autres éléments de couplage (22, 24) et éléments de liaison (26) sont conçus variables en longueur.

3. Véhicule de travail avec un dispositif d'attelage selon une des revendications précédentes, **caractérisé en ce que** les éléments de couplage supérieurs et inférieurs (22, 24) et les éléments de liaison (26) de la structure de couplage (20) sont disposés par paires.

4. Véhicule de travail avec un dispositif d'attelage selon la revendication 3, **caractérisé en ce que** les entretoises de couplage et de liaison (22, 24, 26) sont conçues rigides et, par activation du vérin (18) au nombre d'au moins un de l'unité d'arbre de levage (33), l'outil de travail (31) adapté à la structure de couplage (20) effectue un mouvement de pivotement vertical (45).

5. Véhicule de travail avec un dispositif d'attelage selon la revendication 3, **caractérisé en ce que** les éléments de couplage supérieurs (22) sont conçus variables en longueur, et les éléments de liaison (26) et les éléments de couplage inférieurs (24) sont conçus rigides et, par activation du vérin (18) au nombre d'au moins un de l'unité d'arbre de levage (33) et/ou des éléments de couplage supérieurs (22) variables en longueur, l'outil de travail (31) adapté à la structure de couplage (20) effectue un mouvement de translation (38) en direction de l'axe de pivotement vertical (34), un mouvement de rotation (40) autour de l'axe transversal (35) et/ou un mouvement latéral commandé qui se compose d'une rotation (41) autour de l'axe de pivotement vertical (34) superposée à un mouvement de translation (37) le long de l'axe transversal (35).

6. Véhicule de travail avec un dispositif d'attelage selon la revendication 3, **caractérisé en ce que** les éléments de couplage supérieurs (22) et un élément de liaison (26) sont conçus variables en longueur, et l'autre élément de liaison (26) et les éléments de couplage inférieurs (24) sont conçus rigides et, par activation du vérin (18) au nombre d'au moins un de l'unité d'arbre de levage (33) et/ou des éléments de couplage (22) variables en longueur et/ou de l'élément de liaison (26) variable en longueur, l'outil de travail (31) adapté à la structure de couplage (20) effectue un mouvement de translation (38) le long d'un axe vertical (34), un mouvement de rotation (40) autour de l'axe transversal (35), un mouvement de rotation (39) autour de l'axe longitudinal de véhicule (13) et/ou un mouvement latéral commandé qui se compose d'une rotation (41) autour de l'axe de pivotement vertical (34) superposée à un mouvement de translation (37) le long de l'axe transversal (35).

7. Véhicule de travail avec un dispositif d'attelage selon la revendication 3, **caractérisé en ce que** le véhicule de travail (1) comprend des essieux directeurs (6, 7) qui permettent une fonction de marche en crabe, et un des éléments de couplage inférieurs et supérieurs (22, 24) et un élément de liaison (26) des éléments de couplage et de liaison (22, 24, 26) disposés par paires est conçu rigide et l'autre est conçu variable en longueur et, par activation au moins des éléments de couplage inférieurs et supérieurs (22, 24) variables en longueur ainsi que de l'élément de liaison (26) variable en longueur, le mouvement de l'outil de travail (31) adapté à la structure de couplage (20) peut être couplé au mouvement de braquage des essieux de véhicule (6, 7).

8. Véhicule de travail avec un dispositif d'attelage selon la revendication 7, **caractérisé en ce que**, par activation du vérin (18) au nombre d'au moins un de l'unité d'arbre de levage (33) et/ou des éléments de couplage supérieurs et inférieurs (22, 24) variables en longueur ainsi que d'un élément de liaison (26) variable en longueur, l'outil de travail (31) adapté à la structure de couplage (20) effectue un mouvement de translation (38) en direction verticale (34) et un mouvement de rotation (39) autour de l'axe longitudinal de véhicule (13).

9. Véhicule de travail avec un dispositif d'attelage selon une des revendications 7 à 8, **caractérisé en ce que** les éléments de couplage et de liaison (22, 24, 26) variables en longueur et les éléments de couplage et de liaison (22, 24, 26) rigides sont associés au dispositif d'attelage (3) côté droit ou côté gauche.

10. Véhicule de travail avec un dispositif d'attelage selon la revendication 3, **caractérisé en ce que** le véhicule de travail (1) comprend des essieux directeurs (6, 7) qui permettent une fonction de marche en crabe, et les éléments de couplage supérieurs et un des éléments de couplage inférieurs (22, 24) ainsi qu'un élément de liaison (26) des éléments de couplage (22, 24) et des éléments de liaison (26) disposés par paires sont conçus variables en longueur et les autres éléments de couplage et de liaison (22, 24, 26) sont conçus rigides et, par activation des éléments de couplage (22, 24) variables en longueur ainsi que de l'élément de liaison (26) variable en longueur, le mouvement de l'outil de travail (31) adapté à la structure de couplage (20) peut être couplé au mouvement de braquage des essieux de véhicule (6, 7).

11. Véhicule de travail avec un dispositif d'attelage selon la revendication 10, **caractérisé en ce que**, par activation du vérin (18) au nombre d'au moins un de l'unité d'arbre de levage (33) et/ou des éléments de couplage (22, 24) variables en longueur et de l'élément de liaison (26) variable en longueur de la structure de couplage (20), l'outil de travail (31) adapté à la structure de couplage (20) effectue un mouvement de translation (38) en direction verticale (34), un mouvement de rotation (40) autour de l'axe transversal (35), un mouvement de rotation (39) autour de l'axe longitudinal de véhicule (13) et/ou un mouvement latéral commandé qui se compose d'une rotation (41) autour de l'axe vertical (34) superposée à un mouvement de translation (37) le long de l'axe transversal (35).

12. Véhicule de travail avec un dispositif d'attelage selon la revendication 3, **caractérisé en ce que** les éléments de couplage supérieurs et inférieurs (22, 24) et un élément de liaison (26) sont conçus variables en longueur et l'autre élément de liaison (26) est conçu rigide et, par activation du vérin (18) au nombre d'au moins un de l'unité d'arbre de levage (33) et des éléments de couplage et de liaison (22, 24) variables en longueur ainsi que de l'élément de liaison (26) variable en longueur, l'outil de travail (31) adapté à la structure de couplage (20) effectue des mouvements de translation (36, 37, 38) le long d'un axe de déplacement (13, 34, 35) orienté dans la direction longitudinale de véhicule, transversalement à la direction longitudinale de véhicule ainsi qu'en direction verticale, et des mouvements de rotation (39, 40, 41) autour de cet axe de déplacement.

13. Véhicule de travail avec un dispositif d'attelage selon la revendication 12, **caractérisé en ce que** le mouvement de translation (36) dans le sens et en sens inverse d'un axe de déplacement (13) orienté dans la direction longitudinale de véhicule est utilisé pour compenser des vibrations entre véhicule de travail (1) et outil de travail (31) adapté.

14. Véhicule de travail avec un dispositif d'attelage selon la revendication 13, **caractérisé en ce que** l'outil de travail (31) est une presse à piston, et le mouvement relatif de la structure de couplage (20) dans le sens et en sens inverse de la direction longitudinale de véhicule (13) est utilisé pour compenser les vibrations de l'outil de travail provoquées par le piston de compression.

15. Véhicule de travail avec un dispositif d'attelage selon une des revendications précédentes, **caractérisé en ce que** la variation de longueur des éléments de couplage et de liaison (22, 24, 26) variables en longueur est réalisée par voie hydraulique, mécanique et/ou électrique.

16. Véhicule de travail avec un dispositif d'attelage selon la revendication 15, **caractérisé en ce qu'**au moins un élément de couplage (22, 24) rigide et/ou une entretoise de liaison (26) rigide comprend des moyens (48) pour faire varier manuellement la longueur.

17. Véhicule de travail avec un dispositif d'attelage selon une des revendications précédentes, **caractérisé en ce que** la portée (10) de l'arbre de levage (11) sur la structure de bâti porteur (8) du véhicule de travail (1) et la portée (23, 27) des éléments de couplage inférieurs (24) sur la structure de bâti porteur (8) du véhicule de travail (1) sont proches les unes des autres.

18. Véhicule de travail avec un dispositif d'attelage selon une des revendications précédentes, **caractérisé en ce que** les extrémités libres des éléments de couplage et des éléments de liaison (22, 24, 26) éloignées du véhicule de travail (1) sont directement adaptables à l'outil de travail (31) concerné ou à un cadre de couplage (29).

19. Véhicule de travail avec un dispositif d'attelage selon la revendication 18, **caractérisé en ce que** le cadre de couplage (29) est conçu sensiblement à la manière d'un attelage automatique, et l'extrémité libre côté outil de travail des éléments de couplage et de liaison (22, 24, 26) s'engage sur celui-ci.

20. Véhicule de travail avec un dispositif d'attelage selon une des revendications précédentes, **caractérisé en ce que** les points d'articulation (27) côté outil de travail des éléments de couplage supérieurs et inférieurs (22, 24) et des éléments de liaison (26) sont conçus sous la forme de crochets d'accouplement (50) qui forment une liaison articulée avec les points d'articulation (27) correspondants de l'outil de travail (1) ou d'un cadre de couplage (29).

21. Véhicule de travail avec un dispositif d'attelage selon une des revendications précédentes, **caractérisé en ce que** les points d'articulation (27) côté véhicule de travail des éléments de couplage inférieurs et supérieurs (22, 24) disposés par paires ainsi que des éléments de liaison (26) présentent entre eux une distance (S1-S3) qui permet de positionner entre eux au moins une transmission de prise de force et/ou un dispositif de traction.

22. Véhicule de travail avec un dispositif d'attelage selon une des revendications précédentes, **caractérisé en ce que** les points d'articulation (27) des éléments de couplage et de liaison (22, 24, 26) côté véhicule de travail et côté outil de travail comprennent des paliers (51) à deux ou trois degrés de liberté.

23. Véhicule de travail avec un dispositif d'attelage selon une des revendications précédentes, **caractérisé en ce que**, côté véhicule de travail et/ou côté outil de travail, un élément de couplage (22, 24) et un élément de liaison (26) présentent à chaque fois un point d'articulation commun (27) conçu sous la forme d'un joint à rotule (52).

24. Véhicule de travail avec un dispositif d'attelage selon une des revendications précédentes, **caractérisé en ce que** la structure de couplage (20) peut être utilisée dans une position flottante passive au moyen de l'arbre de levage.

25. Véhicule de travail avec un dispositif d'attelage selon une des revendications précédentes, **caractérisé en ce que** les éléments de couplage supérieurs (22) disposés par paires sont conçus sous la forme de vérins à double effet, les chambres de pression côté tige de piston et côté surface de piston des vérins étant reliées ensemble pour permettre l'échange du fluide sous pression.

26. Véhicule de travail avec un dispositif d'attelage selon une des revendications précédentes, **caractérisé en ce que** les points d'articulation (27) côté véhicule de travail des éléments de couplage inférieurs (24) présentent entre eux une distance d'écartement horizontale (S3), la distance d'écartement (S3) étant réglable.

27. Véhicule de travail avec un dispositif d'attelage selon une des revendications précédentes, **caractérisé en ce que** le dispositif d'attelage (3) est associé au véhicule de travail (1) côté avant et/ou côté arrière.

28. Véhicule de travail avec un dispositif d'attelage selon une des revendications précédentes, **caractérisé en ce que** la structure de couplage (20) définit le centre instantané de rotation horizontal et le centre instantané de rotation vertical (M1, M2) en fonction de la position des éléments de couplage (22, 24) dans l'espace, la position des centres instantanés de rotation (M1, M2) étant réglable.

29. Véhicule de travail avec un dispositif d'attelage selon une des revendications précédentes, **caractérisé en ce que** le mouvement de la structure de couplage (20) en direction verticale (34, 38) est réalisé uniquement par la mise en pression ou la mise hors pression des vérins (18) qui actionnent l'unité d'arbre de levage (33).
